# EUROPEAN PATENT SPECIFICATION

(11) **EP 2 894 708 B1**
(45) Date of publication and mention of the grant of the patent: **29.11.2017**
(21) Application number: 13835762.9
(22) Date of filing: 04.09.2013
(51) Int. Cl.: H01G 9/20

(54) **PHOTOELECTRIC CONVERSION ELEMENT, METHOD FOR PRODUCING SAME, PHOTOELECTRIC CONVERSION ELEMENT MODULE, AND METHOD FOR MANUFACTURING PHOTOELECTRIC CONVERSION ELEMENT MODULE**
FOTOELEKTRISCHES UMWANDLUNGSELEMENT, HERSTELLUNGSVERFAHREN DAFÜR, MODUL FÜR DAS FOTOELEKTRISCHE UMWANDLUNGSELEMENT UND VERFAHREN ZUR HERSTELLUNG DES MODULS FÜR DAS FOTOELEKTRISCHE UMWANDLUNGSELEMENT
ÉLÉMENT DE CONVERSION PHOTOÉLECTRIQUE AINSI QUE PROCÉDÉ DE FABRICATION DE CELUI-CI, ET MODULE D'ÉLÉMENT DE CONVERSION PHOTOÉLECTRIQUE AINSI QUE PROCÉDÉ DE FABRICATION DE CELUI-CI

(30) Priority: 07.09.2012 JP 2012197131
(43) Date of publication of application: 15.07.2015
(73) Proprietor: Sharp Kabushiki Kaisha, Osaka-shi, Osaka 545-8522 (JP)
(72) Inventor: KOMIYA, Ryoichi, Osaka-shi Osaka 545-8522 (JP); FUKUI, Atsushi, Osaka-shi Osaka 545-8522 (JP); YAMANAKA, Ryohsuke, Osaka-shi Osaka 545-8522 (JP)
(74) Representative: Müller Hoffmann & Partner
(86) International application number: PCT/JP2013/073757
(87) International publication number: WO 2014/038570

(56) References cited:
- EP-A1- 2 296 216
- EP-A2- 2 369 605
- WO-A1-2012/033049
- WO-A1-2012/086377
- JP-A- 2006 236 960
- JP-A- 2008 016 351
- JP-A- 2009 110 796
- JP-A- 2011 165 641
- JP-A- 2012 048 863
- US-A1- 2010 108 135
- US-A1- 2010 132 785
- JIHUAI WU ET AL: "A Large-Area Light-Weight Dye-Sensitized Solar Cell based on All Titanium Substrates with an Efficiency of 6.69% Outdoors", ADVANCED MATERIALS, vol. 24, no. 14, 7 March 2012 (2012-03-07) , pages 1884-1888, XP055267318, DE ISSN: 0935-9648, DOI: 10.1002/adma.201200003
- G.R.A. KUMARA ET AL: "Large area dye-sensitized solar cells with titanium based counter electrode", THIN SOLID FILMS, vol. 520, no. 12, 21 April 2011 (2011-04-21), pages 4119-4121, XP055267315, CH ISSN: 0040-6090, DOI: 10.1016/j.tsf.2011.04.101

## Description

### TECHNICAL FIELD

The present invention relates to a photoelectric conversion device and a method of manufacturing the same, and a photoelectric conversion device module and a method of manufacturing the same.

### BACKGROUND ART

As an energy source to replace the fossil fuel, the solar cell converting solar radiation into electric power is being of interest. Currently, a solar cell in which a crystalline silicon substrate is used, a thin-film silicon solar cell, and the like have been commercialized. The former solar cell, however, has a problem that the cost for fabricating the silicon substrate is high. The latter thin-film silicon solar cell has a problem that the need for different gases to be used for manufacturing a semiconductor and the need for a complicated apparatus increase the manufacturing cost. For all of these solar cells, efforts have been continued to reduce the cost per output power by enhancing the photoelectric conversion efficiency. The above-described problems, however, have not yet been overcome.

Japanese Patent Laying-Open No. 01-220380 (PTD 1) is a prior document disclosing, as a new-type solar cell, a photoelectric conversion device to which photoinduced electron transfer in a metal complex is applied. In the photoelectric conversion device disclosed in PTD 1, a photoelectric conversion layer is sandwiched between two glass substrates. The photoelectric conversion layer is made from an electrolyte material and a photoelectric conversion material on which a dye is adsorbed so that a visible light region has an absorption spectrum. A first electrode is formed on one of the two glass substrates and a second electrode is formed on the other glass substrate.

Application of light from the first electrode side to the photoelectric conversion device causes electrons to be generated in the photoelectric conversion layer. The generated electrons move from the first electrode through an external electrical circuit to the second electrode. The moved electrons are then carried by ions in the electrolyte to be returned to the photoelectric conversion layer. Such a series of flows of the electrons allows electrical energy to be extracted.

In a common photoelectric conversion device, two substrates coated with a transparent conducting film are used. In contrast, WO1997/01683 (PTD 2) is a prior document disclosing a dye-sensitized solar cell module made up of a plurality of solar cells connected in series on one glass substrate coated with a transparent conducting film, in order to reduce the cost.

In the dye-sensitized solar cell module disclosed in PTD 2, individual solar cells are arranged on the transparent substrate (glass substrate) where a transparent conducting film (first electrode) is patterned in the shape of a strip. In each solar cell, a porous semiconductor layer to serve as a photoelectric conversion layer, a porous insulating layer, and a back electrode (second electrode) are successively stacked.

In such a dye-sensitized solar cell module, the first electrode of one of solar cells adjacent to each other and the second electrode of the other solar cell contact each other, and accordingly one solar cell and the other solar cell are connected in series.

In US 2010/132785 A1 a dye-sensitized photoelectric conversion element module, such as a dye-sensitized solar cell module, is provided, which can be structured so as to be lightweight, thin and flexible, and with which a high electric power generation efficiency can be obtained, and a method of manufacturing the same. In a dye-sensitized photoelectric conversion element module having a plurality of dye-sensitized photoelectric conversion elements on a supporting base material, a filmy glass substrate having a thickness of 0.2 mm or less is used as the supporting base material, and a resin system protective film having a size equal to or larger than that of the filmy glass substrate is bonded to at least one surface of the dye-sensitized photoelectric conversion element module. A dye-sensitized semiconductor layer, a porous insulating layer, and a counter electrode are laminated in order on a transparent conductive layer formed on the filmy glass substrate, thereby structuring a dye-sensitized photoelectric conversion element module. The dye-sensitized semiconductor layer and a porous insulating layer are impregnated with an electrolyte.

US 2010/108135 A1 discloses a dye-sensitized photoelectric conversion device that is formed by sequentially arranging a dye-sensitized semiconductor layer, a porous insulating layer and a counter electrode on a transparent conductive layer which is formed on a transparent substrate. The counter electrode is composed of a metal or alloy foil having a catalyst layer on one surface which is on the porous insulating layer side, or a foil made of a material having a catalytic activity. At a position between two adjacent dye-sensitized photoelectric conversion devices, the transparent conductive layer of one dye-sensitized photoelectric conversion device and the counter electrode of the other dye-sensitized photoelectric conversion device are electrically connected with each other. The dye-sensitized semiconductor layer and the porous insulating layer are impregnated with an electrolyte. Each dye-sensitized photoelectric conversion device is covered with a sealing layer.

EP 2 296 216 A1 discloses a dye-sensitized solar cell wherein a counter electrode composed of a stable counter electrode conductive layer and a catalyst layer is formed on a porous insulation layer, and a dye-sensitized solar cell module wherein the dye-sensitized solar cell is utilized. A dye-sensitized solar cell includes a supporting body made of a light-transmissive material, and a laminate wherein a conductive layer, a photoelectric conversion layer having a porous semiconductor layer with a dye adsorbed therein, a porous insulation layer, a counter electrode conductive layer, and a catalyst layer are laminated in the order presented. The photoelectric conversion layer and the porous insulation layer are filled with a carrier transport material.

### CITATION LIST

### PATENT DOCUMENT

PTD 1: Japanese Patent Laying-Open No. 01-220380
PTD 2: WO1997/01683

### SUMMARY OF INVENTION

### TECHNICAL PROBLEM

Regarding photoelectric conversion devices formed on one substrate coated with a transparent conducting film, a photoelectric conversion device includes a first electrode and a second electrode and the second electrode is electrically connected to another first electrode adjacent to the former first electrode. A leak current flows from this second electrode to decrease the conversion efficiency.

The present invention has been made in view of the above problem, and an object of the invention is to provide a photoelectric conversion device and a method of manufacturing the same, and a photoelectric conversion device module and a method of manufacturing the same, by which the leak current can be reduced and accordingly a decrease of the conversion efficiency can be suppressed.

### SOLUTION TO PROBLEM

The above problem is solved by the subject-matter of the independent claims.

A photoelectric conversion device based on the present invention includes: a translucent substrate having a light-receiving surface; a cover portion arranged opposite to the translucent substrate; and a plurality of first electrodes formed on a surface, opposite to the cover portion, of the translucent substrate. The photoelectric conversion device also includes: an insulating seal portion arranged between the first electrode and the cover portion and forming an internal space by surrounding the space; a photoelectric conversion portion formed in the space and on an upper surface of the first electrode; and a second electrode extending in the space so that the second electrode is partially opposite to an upper surface of the photoelectric conversion portion and opposite to a lower surface of the cover portion, and electrically connected to another first electrode adjacent to the first electrode having the upper surface on which the photoelectric conversion portion is formed. The photoelectric conversion device further includes: a porous insulating portion located between the photoelectric conversion portion and the second electrode and electrically insulating the photoelectric conversion portion and the second electrode from each other; an intercellular insulating portion located along at least a part of a periphery of the photoelectric conversion portion and electrically insulating the first electrode and the second electrode from each other; and a carrier transport portion filling an inside of the space. A protective film is formed on a surface of the second electrode.

In an embodiment of the present invention, the protective film is an oxide of a metal forming the second electrode.

In an embodiment of the present invention, the second electrode and the intercellular insulating portion contact each other.

In an embodiment of the present invention, the intercellular insulating portion contacts at least two sides out of four sides of the photoelectric conversion portion.

In an embodiment of the present invention, the second electrode includes at least one or more metal materials among titanium, nickel, tungsten, and tantalum.

In a first aspect of a photoelectric conversion device module based on the present invention, the module includes a plurality of photoelectric conversion devices including the photoelectric conversion device recited in any of the above that are electrically connected in series to each other.

In a second aspect of a photoelectric conversion device module based on the present invention, the module includes a plurality of photoelectric conversion devices including the photoelectric conversion device recited in any of the above that are electrically connected in parallel to each other.

In a third aspect of a photoelectric conversion device module based on the present invention, the module includes three or more photoelectric conversion devices including the photoelectric conversion device recited in any of the above that are electrically connected to each other. The photoelectric conversion device module includes photoelectric conversion devices connected in series to each other and photoelectric conversion devices connected in parallel to each other.

In an embodiment of the present invention, the plurality of photoelectric conversion devices are all the photoelectric conversion device as recited in any of the above.

In a first aspect of a method of manufacturing a photoelectric conversion device based on the present invention, the method of manufacturing a photoelectric conversion device as recited in any of the above includes forming the protective film by heating and thereby oxidizing the second electrode.

In a second aspect of a method of manufacturing a photoelectric conversion device based on the present invention, the method of manufacturing a photoelectric conversion device as recited in any of the above includes forming the protective film by applying onto the second electrode a solution in which the organic compound is dissolved.

A method of manufacturing a photoelectric conversion device module based on the present invention includes electrically connecting a plurality of photoelectric conversion devices to each other in at least one of series and parallel, the plurality of photoelectric conversion devices including a photoelectric conversion device manufactured by the method of manufacturing a photoelectric conversion device as recited in any of the above.

### ADVANTAGEOUS EFFECTS OF INVENTION

In accordance with the present invention, leak current can be reduced and accordingly a decrease of the conversion efficiency can be suppressed.

### BRIEF DESCRIPTION OF DRAWINGS

Fig. 1 is a cross-sectional view showing a structure of a photoelectric conversion device according to one embodiment of the present invention.
Fig. 2 is a diagram as seen in the direction indicated by arrows of line II-II in Fig. 1.
Fig. 3 is a plan view showing a shape of an intercellular insulating portion according to the present embodiment.
Fig. 4 is a plan view showing a shape of an intercellular insulating portion of a first modification according to the present embodiment.
Fig. 5 is a plan view showing a shape of an intercellular insulating portion of a second modification according to the present embodiment.
Fig. 6 is a plan view showing a shape of an intercellular insulating portion of a third modification according to the present embodiment.
Fig. 7 is a cross-sectional view showing a structure of a photoelectric conversion device module according to one embodiment of the present invention.
Fig. 8 is a diagram as seen in the direction indicated by arrows of line VIII-VIII in Fig. 7.

### DESCRIPTION OF EMBODIMENTS

In the following, a photoelectric conversion device and a photoelectric conversion device module according to embodiments of the present invention will be described with reference to the drawings. In the drawings, the same reference characters denote the same portions or corresponding portions. Relations in terms of dimensions such as length, width, thickness, and depth are changed as appropriate for the sake of clarification and simplification of the drawings, and do not represent the actual dimensional relations.

### <Structure of Photoelectric Conversion Device>

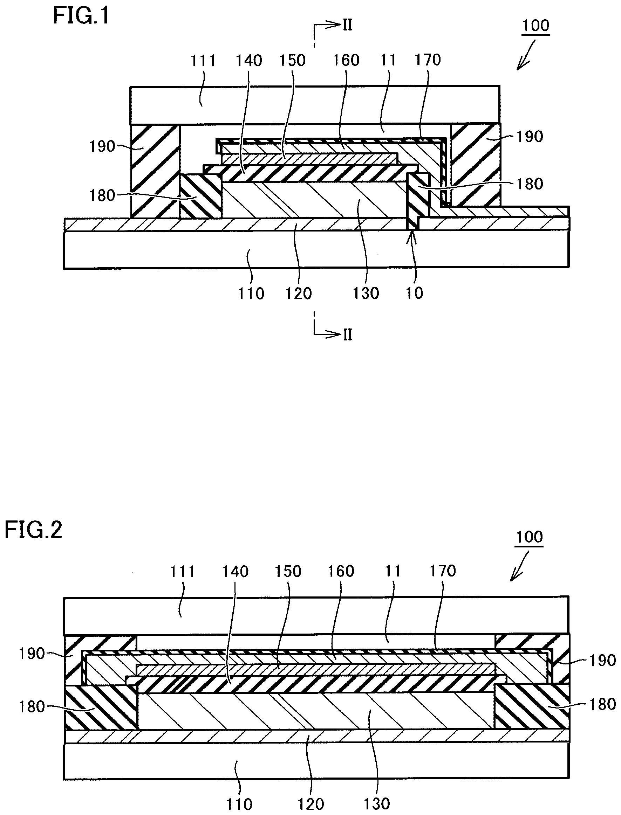

Fig. 1 is a cross-sectional view showing a structure of a photoelectric conversion device according to one embodiment of the present invention. Fig. 2 is a diagram as seen in the direction indicated by arrows of line II-II in Fig. 1.

As shown in Fig. 1, photoelectric conversion device 100 includes a translucent substrate 110 having a light-receiving surface, a cover portion 111 arranged opposite to translucent substrate 110, and a plurality of first electrodes 120 formed on a surface, which is opposite to cover portion 111, of translucent substrate 110. A plurality of first electrodes 120 are separated from each other by a scribe line 10.

Photoelectric conversion device 100 also includes an insulating seal portion 190 arranged between first electrode 120 and cover portion 111 and forming an internal space by surrounding the space, a photoelectric conversion portion 130 formed in the space and on an upper surface of first electrode 120, and a second electrode 160 extending in the space so that second electrode 160 is partially opposite to an upper surface of photoelectric conversion portion 130 and opposite to a lower surface of cover portion 111, and electrically connected to another first electrode 120 adjacent to first electrode 120 having the upper surface on which photoelectric conversion portion 130 is formed.

Photoelectric conversion device 100 further includes a porous insulating portion 140 located between photoelectric conversion portion 130 and second electrode 160 and electrically insulating photoelectric conversion portion 130 and second electrode 160 from each other, an intercellular insulating portion 180 located along at least a part of a periphery of photoelectric conversion portion 130 and electrically insulating first electrode 120 and second electrode 160 from each other, and a carrier transport portion 11 filling an inside of the space.

Photoelectric conversion portion 130 includes a porous semiconductor layer. A carrier transport material fills pores of the porous semiconductor layer, those of porous insulating portion 140, and those of second electrode 160. A protective film 170 is formed on a surface of second electrode 160. In the present embodiment, a catalyst layer 150 is provided between porous insulating portion 140 and second electrode 160.

In the following, each of the constituent portions of photoelectric conversion device 100 will be illustrated.

### <Translucent Substrate>

Translucent substrate 110 may for example be a glass substrate such as soda glass, fused silica glass, or crystalline silica glass, or a heat-resistant resin substrate such as flexible film. It should be noted that translucent substrate 110 may at least be a substrate substantially transmitting light of a wavelength having an effective sensitivity for dyes described later herein (the transmittance for the light is for example 80% or more, preferably 90% or more), and may not necessarily transmit light of all wavelengths.

The material forming the flexible film (hereinafter also referred to as "film") may for example be tetraacetylcellulose (TAC), polyethylene terephthalate (PET), polyphenylene sulfide (PPS), polycarbonate (PC), polyarylate (PA), polyetherimide (PEI), phenoxy resin, or polytetrafluoroethylene (PTFE), or the like.

In the case where another layer is formed on translucent substrate 110 through heat treatment, specifically in the case for example where a porous semiconductor layer is formed on translucent substrate 110 through heat treatment at approximately 250°C, it is particularly preferable to use polytetrafluoroethylene having heat resistance to a temperature of 250°C or more, among the aforementioned materials for the film.

When completed photoelectric conversion device 100 is attached to another structure, translucent substrate 110 can be utilized. Namely, metalwork parts and screws can be used to easily attach to another support a peripheral portion of translucent substrate 110 such as glass substrate.

The thickness of translucent substrate 110 is not particularly limited. In terms of light transmittance, preferably the thickness is approximately 0.2 mm or more and 5 mm or less.

### <First Electrode>

A transparent conducting layer forming first electrode 120 may at least substantially transmit light of a wavelength having an effective sensitivity for dyes described later herein, and may not necessarily transmit light of all wavelengths. The material for first electrode 120 may for example be indium-tin composite oxide (ITO), tin oxide (SnO₂), fluorine-doped tin oxide (FTO), zinc oxide (ZnO), or titanium oxide doped with tantalum or niobium, or the like.

The thickness of the transparent conducting layer forming first electrode 120 is not particularly limited. Preferably, the thickness is approximately 0.02 µm or more and 5 µm or less. The membrane resistance of the transparent conducting layer forming first electrode 120 is preferably as low as possible, and is preferably 40 Ω/sq or less.

As the translucent substrate, a commercial product in which first electrode 120 made of FTO is layered in advance on translucent substrate 110 made from soda-lime float glass may be used, for example.

### <Scribe Line>

Scribe line 10 is provided for separating transparent conducting layers serving respectively as respective first electrodes 120 of photoelectric conversion devices from each other. The method of forming scribe line 10 is not particularly limited. For example, a transparent conducting layer which is to serve as first electrode 120 may be formed on the whole upper surface of translucent substrate 110 and thereafter a part of the transparent conducting layer that is to be where scribe line 10 is located may be removed by the laser scribing method or the like. Alternatively, a mask may be placed on a part of the upper surface of translucent substrate 110 that is to be where scribe line 10 is located, then first electrode 120 may be formed on the remaining part, where the mask or the like is not provided, of the upper surface of translucent substrate 110, and thereafter the mask may be removed.

### <Photoelectric Conversion Portion>

Photoelectric conversion portion 130 is formed of a porous semiconductor layer on which a dye or quantum dot or the like is adsorbed and which has pores filled with the carrier transport material.

### - Porous Semiconductor Layer -

A semiconductor material forming the porous semiconductor layer is not particularly limited as long as the material is commonly used as a photoelectric conversion material. Such a material may for example be a compound such as titanium oxide, zinc oxide, tin oxide, iron oxide, niobium oxide, cerium oxide, tungsten oxide, barium titanate, strontium titanate, cadmium sulfide, lead sulfide, zinc sulfide, indium phosphide, copper-indium sulfide (CuInS₂), CuAlO₂, or SrCu₂O₂. These compounds may be used singly or these compounds may be used in combination. Among these compounds, titanium oxide is preferably used in terms of stability and safety.

In the case where titanium oxide is used as a material forming the porous semiconductor layer, the titanium oxide may be any of a variety of titanium oxides in a narrow sense such as anatase-type titanium oxide, rutile-type titanium oxide, amorphous titanium oxide, metatitanic acid, or orthotitanic acid, or may be titanium hydroxide, or may be hydrous titanium oxide. These titanium oxides may be used singly or in the form of a mixture. Regarding anatase-type titanium oxide and rutile-type titanium oxide, anatase-type titanium oxide that can be in either form depending on the process of manufacture or thermal hysteresis is common.

In terms of ease of adsorption of a photosensitizer, it is preferable to use, as a material forming the porous semiconductor layer, a material having a high content of anatase-type titanium oxide, and it is more preferable to use a material having a content of 80% or more of anatase-type titanium oxide. The method of manufacturing titanium oxide is not particularly limited. A known method described in any of a variety of documents, such as vapor phase method or liquid phase method (hydrothermal method or sulfuric acid method) may be used. The method may be a method for obtaining a chloride through high-temperature hydrolysis developed by Degussa.

The form of the porous semiconductor layer may either be monocrystalline form or polycrystalline form. In terms of stability, difficulty in crystal growth, and manufacturing cost for example, the porous semiconductor layer is preferably a polycrystalline sintered body, and particularly preferably a polycrystalline sintered body made up of fine powder (from nanoscale to microscale).

The porous semiconductor layer may be made up of particles of the same size of a compound semiconductor material, or particles of different sizes of a compound semiconductor material. Relatively large particles scatter incident light and are therefore considered as contributing to improvement of the light capture ratio. Use of relatively small particles provides a greater number of points of adsorption of the photosensitizer, and therefore, relatively small particles are considered as contributing to improvement of the amount of adsorption of the photosensitizer.

Preferably, the average particle size of the relatively large particles is at least ten times as large as the average particle size of the relatively small particles. For example, the relatively large particles have an average particle size of preferably 100 nm or more and 500 nm or less, and the relatively small particles have an average particle size of preferably 5 nm or more and 50 nm or less. The particles of different sizes may be made from the same material or different materials. In the case where the particles of different sizes are made from different materials, preferably relatively small particles are made from a material having a strong adsorption capability.

It should be noted that the average particle size may be calculated by means of a spectrum (diffraction peak of XRD (x-ray diffraction)) obtained from x-ray diffraction measurement, or determined by direct observation with a scanning electron microscope (SEM).

The thickness of the porous semiconductor layer is not particularly limited, and an appropriate thickness thereof is approximately 0.1 µm or more and 100 µm or less, for example. Since the photosensitizer is adsorbed on the porous semiconductor layer, it is preferable that the porous semiconductor layer has a large surface area. For example, the porous semiconductor layer preferably has a BET specific surface area of approximately 10 m²/g or more and 200 m²/g or less.

### - Photosensitizer -

The photosensitizer is provided for converting light energy injected into the photoelectric conversion device into electrical energy. A dye adsorbed on the porous semiconductor layer to serve as a photosensitizer may be organic dye or metal complex dye or the like absorbing light of at least one of the visible region and the infrared region. Such dyes may be used singly or in the form of a mixture of two or more different dyes.

The organic dye is, for example, azo-based dye, quinone-based dye, quinoneimine-based dye, quinacridone-based dye, squarylium-based dye, cyanine-based dye, merocyanine-based dye, triphenylmethane-based dye, xanthene-based dye, porphyrin-based dye, perylene-based dye, indigo-based dye, phthalocyanine-based dye, or naphthalocyanine-based dye, or the like. The absorption coefficient of the organic dye is generally larger than the absorption coefficient of the metal complex dye.

In the metal complex dye, molecules (ligands) are coordinate-bonded to a transition metal. The transition metal is, for example, Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, or Rh, or the like. The metal complex dye may be porphyrin-based metal complex dye, phthalocyanine-based metal complex dye, naphthalocyanine-based metal complex dye, or ruthenium-based metal complex dye, or the like. Among them, phthalocyanine-based metal complex dye or ruthenium-based metal complex dye is preferred, and ruthenium-based metal complex dyes expressed by the following chemical formulas (1) to (3) are more preferred.

A commercially available ruthenium-based metal complex dye is, for example, a dye having trade name Ruthenium 535, Ruthenium 535-bisTBA, or Ruthenium 620-1H3TBA manufactured by Solaronix SA., or the like.

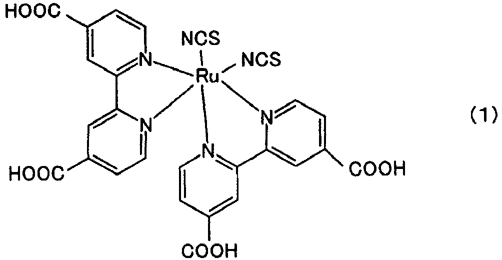

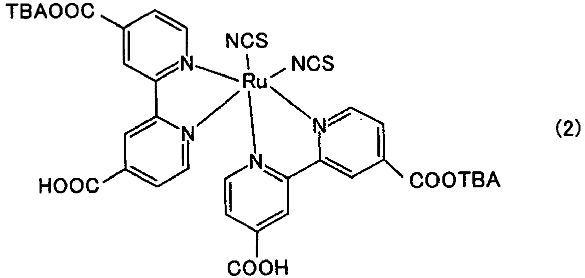

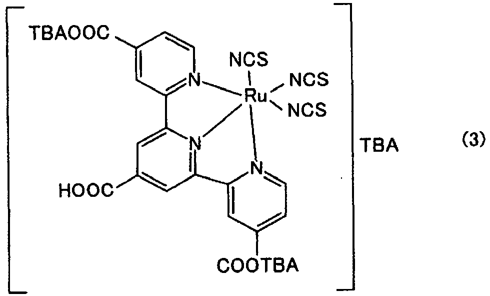

The method of causing the photosensitizer to be adsorbed on the porous semiconductor layer may typically be a method by which the porous semiconductor layer is immersed in a solution in which a dye is dissolved (dye adsorption solution), for example. At this time, the dye adsorption solution is preferably heated in order to allow the dye adsorption solution to enter deeply into fine pores of the porous semiconductor layer.

In order for the dye to be firmly adsorbed on the porous semiconductor layer, preferably molecules of the dye contain an interlock group such as carboxyl group, alkoxy group, hydroxyl group, sulfonic acid group, ester group, mercapto group, or phosphonyl group, or the like. The interlock group provides electrical coupling that facilitates movement of electrons between the dye in the excited state and the conduction band of the semiconductor material.

The quantum dot adsorbed on the porous semiconductor layer to serve as a photosensitizer may be CdS, CdSe, PbS, or PbSe, or the like.

### <Porous Insulating Portion>

Porous insulating portion 140 is provided on photoelectric conversion portion 130 in order to reduce leak current from photoelectric conversion portion 130 to catalyst layer 150 and second electrode 160. Porous insulating portion 140 is herein identified as porous by that the porosity is 20% or more and the specific surface area is 10 m²/g or more and 100 m²/g or less. Such porous insulating portion 140 has a pore size of preferably 50 µm or more, and more preferably 50 µm or more and 200 µm or less.

In other words, porous insulating portion 140 is preferably made up of particles having an average particle size of 5 nm or more and 500 nm or less, and more preferably made up of particles having an average particle size of 10 nm or more and 300 nm or less. Thus, porous insulating portion 140 can hold the carrier transport material. It should be noted that the pore size of porous insulating portion 140 is preferably measured in accordance with the BET method, for example. Preferably, the porosity of porous insulating portion 140 and the average particle size of the particles forming porous insulating portion 140 are measured in accordance with the methods described above under <Photoelectric Conversion Layer>.

The material for porous insulating portion 140 is not particularly limited. As this material, glass may be used, or one of or two or more of insulating materials having a high conduction band level such as zirconium oxide, silicon oxide, aluminum oxide, niobium oxide, barium titanate, and the like may selectively be used. In the case where two or more of these materials are used, a single layer made of a mixture of the two or more materials, or multiple layers made up of stacked layers made of these materials respectively, may form porous insulating portion 140. Preferably, porous insulating portion 140 contains zirconium oxide or titanium oxide having an average particle size of 100 nm or more.

The thickness of porous insulating portion 140 is not particularly limited. In terms of electrical insulation, the thickness is preferably 2 µm or more and 50 µm or less, and more preferably 5 µm or more and 20 µm or less.

### <Catalyst Layer>

In the present embodiment, catalyst layer 150 is provided to be sandwiched between porous insulating portion 140 and second electrode 160. The material forming catalyst layer 150 is not particularly limited as long as the material can transfer and receive electrons at its surface. For example, noble metal material such as platinum, palladium, or the like, or carbon-based material such as carbon black, Ketjen black, carbon nanotube, fullerene, or the like can be used. It should be noted that catalyst layer 150 may be provided in the form (single layer) of being integrated with second electrode 160, or catalyst layer 150 may not be provided in the case where second electrode 160 having catalytic activity is provided.

In the case where the strength of formed catalyst layer 150 is not sufficiently high, like the case where catalyst layer 150 is formed by the vapor deposition method, formation of second electrode 160 on catalyst layer 150 which is formed on porous insulating portion 140 may result in peeling of second electrode 160 away from catalyst layer 150. In this case, it is preferable to provide second electrode 160 on porous insulating portion 140 and catalyst layer 150 is provided on this second electrode 160.

### <Second Electrode>

Second electrode 160 includes a planar portion opposite to photoelectric conversion portion 130, and a standing portion located at an end which is not opposite to photoelectric conversion portion 130 and bent toward first electrode 120. The standing portion has one end continuing from the planar portion and the other end contacting another first electrode 120 which is adjacent to first electrode 120 contacting photoelectric conversion portion 130 opposite to the planar portion.

The material forming second electrode 160 is at least one or more metal materials among titanium, nickel, tungsten, and tantalum. The method of forming second electrode 160 may be a known method described in any of a variety of documents, such as vapor deposition method, sputtering method, or spraying method, or the like.

The thickness of second electrode 160 is not particularly limited. If the thickness of second electrode 160 is too small, however, second electrode 160 has a higher electrical resistance and, if the thickness of second electrode 160 is too large, movement of the carrier transport material is hindered. The thickness of second electrode 160 is preferably selected as appropriate in view of the above. Preferably, the thickness of second electrode 160 is approximately 0.02 µm or more and 5 µm or less. A lower membrane resistance of the conducting layer forming second electrode 160 is preferred, and the resistance is preferably 40 Ω/sq or less.

In the case where second electrode 160 is formed by the vapor deposition method, resultant second electrode 160 is itself porous and therefore it is unnecessary to separately form pores in second electrode 160 for allowing a dye solution or carrier transport material or the like to move into the pores. In the case where the vapor deposition method is used to form second electrode 160, the pore size of the pores which are automatically formed in second electrode 160 is about 1 nm or more and 20 nm or less. It has been confirmed that, even when catalyst layer 150 is formed on second electrode 160, there is no possibility that the material forming catalyst layer 150 passes through the inside of the pores formed in second electrode 160 to arrive at porous insulating portion 140 and further at the porous semiconductor layer (photoelectric conversion portion 130).

For the sake of intended formation of pores in second electrode 160, preferably a laser beam is applied to partially evaporate second electrode 160. The size of such pores is preferably 0.1 µm or more and 100 µm or less, and more preferably 1 µm to 50 µm. The pores are located preferably at intervals of 1 µm or more and 200 µm or less, and more preferably at intervals of 10 µm or more and 30 µm or less.

Stripe-shaped openings formed in second electrode 160 produce a similar effect. In this case, the stripe-shaped openings are located preferably at intervals of approximately 1 µm or more and 200 µm or less, and more preferably at intervals of approximately 10 µm or more and 30 µm or less.

In the present embodiment, the protective film is formed on the surface of second electrode 160, in order to reduce leak current from second electrode 160. The protective film is a film made from a metal oxide, wherein the oxide is an oxide of a metal which forms second electrode 1 160. As described above, second electrode 160 may be peeled away while second electrode 160 is heated. In this case, the yield of the photoelectric conversion device is decreased, which is not preferred. In order to suppress occurrence of peeling of second electrode 160, the second electrode 160 and intercellular insulating portion 180 are made in contact with each other.

Accordingly, as described later herein, it is preferable that intercellular insulating portion 180, which is in contact with at least two sides out of the four sides of photoelectric conversion portion 130, is made in contact with second electrode 160, to fix second electrode 160 through intercellular insulating portion 180, and thereby suppress occurrence of peeling of second electrode 160.

It should be noted that second electrode 160 is provided with an extraction electrode (not shown) as required. The extraction electrode enables current to be extracted from the photoelectric conversion device to the outside. The material for the extraction electrode is not particularly limited as long as the material has electrical conductivity.

### <Intercellular Insulating Portion>

Intercellular insulating portion 180 is provided for electrically insulating first electrode 120 and second electrode 160 from each other. Specifically, intercellular insulating portion 180 electrically insulates first electrode 120 having its upper surface on which photoelectric conversion portion 130 is formed, and the standing portion of second electrode 160 from each other.

Intercellular insulating portion 180 is preferably a layer denser than porous insulating portion 140. The material forming such an intercellular insulating portion 180 may for example be silicone resin, epoxy resin, polyisobutylene-based resin, hot melt resin, or glass frit, or the like. These materials may be used singly to form intercellular insulating portion 180, or two or more of these materials may be formed into two or more layers to thereby form intercellular insulating portion 180.

In the case where intercellular insulating portion 180 is formed before the porous semiconductor layer and porous insulating portion 140 are formed, it is necessary that intercellular insulating portion 180 has heat resistance to a heating temperature at which the porous semiconductor layer and porous insulating portion 140 are formed. In addition, intercellular insulating portion 180 is exposed to ultraviolet radiation included in received light, and therefore has to have resistance to ultraviolet radiation. In view of the above respects, it is preferable to use glass-based material as the material forming intercellular insulating portion 180, and more preferable to use bismuth-based glass paste.

Regarding the aforementioned glass-based material, some glass-based materials are commercially available in the form of glass paste or glass frit. Among them, in consideration of reactivity to the carrier transport material and the environmental issue, a glass-based material containing no lead is preferred. Further, in the case where intercellular insulating portion 180 is formed on translucent substrate 110 formed of a glass substrate, the firing temperature of intercellular insulating portion 180 is preferably 550°C or less.

As described above under <Second Electrode>, intercellular insulating portion 180 may have a function of suppressing occurrence of peeling of second electrode 160. Therefore, intercellular insulating portion 180 is preferably in contact with at least two sides out of the four sides of photoelectric conversion portion 130.

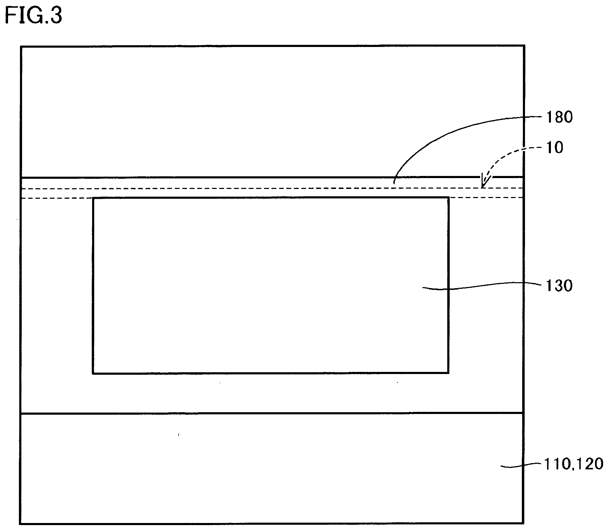

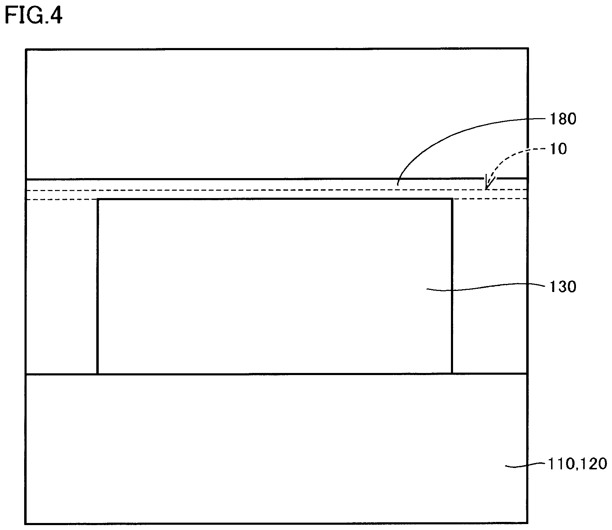

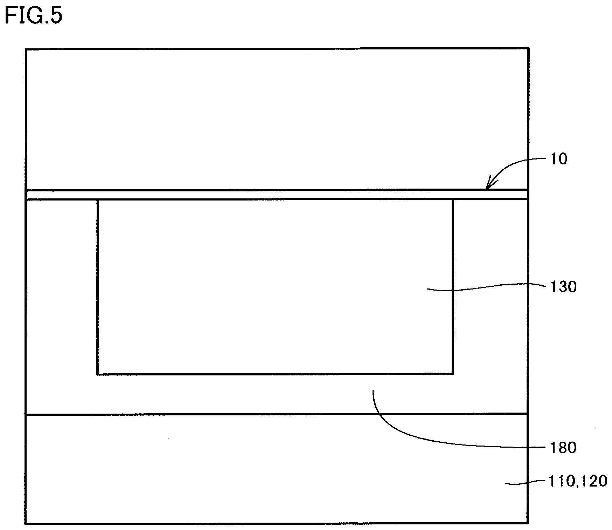

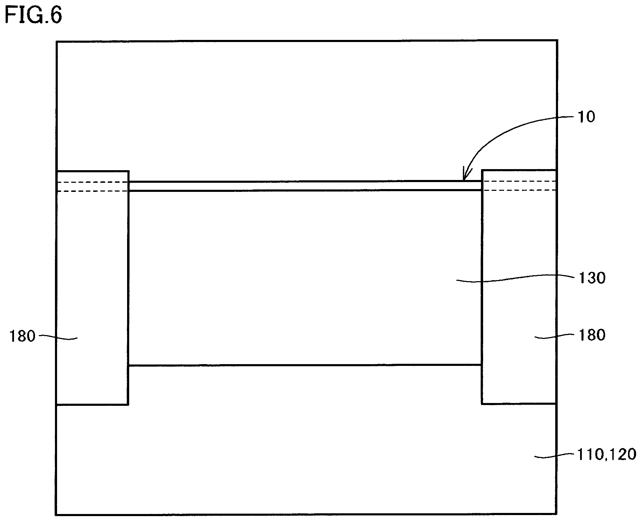

Fig. 3 is a plan view showing a shape of the intercellular insulating portion according to the present embodiment. Fig. 4 is a plan view showing a shape of the intercellular insulating portion of a first modification according to the present embodiment. Fig. 5 is a plan view showing a shape of the intercellular insulating portion of a second modification according to the present embodiment. Fig. 6 is a plan view showing a shape of the intercellular insulating portion of a third modification according to the present embodiment. It should be noted that Figs. 3 to 6 only show translucent substrate 110, first electrode 120, photoelectric conversion portion 130, intercellular insulating portion 180, and scribe line 10 for the sake of simplicity.

As shown in Fig. 3, intercellular insulating portion 180 in the present embodiment is formed to surround the periphery of photoelectric conversion portion 130 in the shape of a rectangle as seen in a plan view. Thus, intercellular insulating portion 180 can be made in contact with the whole periphery of photoelectric conversion portion 130 to thereby enhance the bonding strength between intercellular insulating portion 180 and photoelectric conversion portion 130.

Namely, since photoelectric conversion portion 130 is secured to translucent substrate 110 with first electrode 120 interposed therebetween, the area where intercellular insulating portion 180 and photoelectric conversion portion 130 contact each other can be increased to thereby enhance the bonding strength of intercellular insulating portion 180 to translucent substrate 110 with photoelectric conversion portion 130 interposed therebetween.

This intercellular insulating portion 180 and second electrode 160 can be made in contact with each other to thereby enhance the bonding strength of second electrode 160 to translucent substrate 110 with intercellular insulating portion 180 interposed therebetween. Accordingly, occurrence of peeling of second electrode 160 can be suppressed.

In the first modification as shown in Fig. 4, intercellular insulating portion 180 contacts photoelectric conversion portion 130 along three sides out of the four sides of photoelectric conversion portion 130. Specifically, intercellular insulating portion 180 contacts photoelectric conversion portion 130 along three sides other than the side which is opposite to the side of photoelectric conversion portion 130 that is adjacent to scribe line 10 as seen in a plan view.

In this case as well, intercellular insulating portion 180 and second electrode 160 can be made in contact with each other to thereby enhance the bonding strength of second electrode 160 to translucent substrate 110 with intercellular insulating portion 180 interposed therebetween. Accordingly, occurrence of peeling of second electrode 160 can be suppressed.

In the second modification as shown in Fig. 5, intercellular insulating portion 180 contacts photoelectric conversion portion 130 along three sides out of the four sides of photoelectric conversion portion 130. Specifically, intercellular insulating portion 180 contacts photoelectric conversion portion 130 along three sides other than the side of photoelectric conversion portion 130 that is adjacent to scribe line 10 as seen in a plan view.

In this case as well, intercellular insulating portion 180 and second electrode 160 can be made in contact with each other to thereby enhance the bonding strength of second electrode 160 to translucent substrate 110 with intercellular insulating portion 180 interposed therebetween. Accordingly, occurrence of peeling of second electrode 160 can be suppressed.

In the third modification as shown in Fig. 6, intercellular insulating portion 180 contacts photoelectric conversion portion 130 along two sides out of the four sides of photoelectric conversion portion 130. Specifically, intercellular insulating portion 180 contacts photoelectric conversion portion 130 along two sides other than the side of photoelectric conversion portion 130 that is adjacent to scribe line 10 and the side opposite to the former side.

In this case as well, intercellular insulating portion 180 and second electrode 160 can be made in contact with each other to thereby enhance the bonding strength of second electrode 160 to translucent substrate 110 with intercellular insulating portion 180 interposed therebetween. Accordingly, occurrence of peeling of second electrode 160 can be suppressed.

### <Cover Portion>

Cover portion 111 has a function of holding carrier transport portion 11 in photoelectric conversion device 100 and preventing water or the like from entering from the outside. In consideration of the case where photoelectric conversion device 100 is installed outdoors, tempered glass or the like is preferably used as cover portion 111.

Preferably, cover portion 111 is not in contact with the constituent parts on translucent substrate 110. Thus, a sufficient amount of carrier transport portion 11 can be held in photoelectric conversion device 100.

In addition, cover portion 111 preferably has an inlet for injecting, from this inlet, a carrier transport material which is to form carrier transport portion 11. The inlet is provided in cover portion 111 to thereby enable the carrier transport material to be injected into photoelectric conversion device 100 by means of vacuum injection method or vacuum impregnation method or the like.

In this case, a gap which is formed because cover portion 111 is not in contact with the constituent parts on translucent substrate 110, as described above, serves as a flow path for the carrier transport material. The speed at which the carrier transport material is injected from the inlet can thus be increased. Accordingly, the takt time of photoelectric conversion device 100 and a photoelectric conversion device module can be shortened.

### <Insulating Seal Portion>

Insulating seal portion 190 is provided for coupling translucent substrate 110 and cover portion 111 to each other. In addition, insulating seal portion 190 has a function of holding carrier transport portion 11 in photoelectric conversion device 100 and preventing water or the like from entering from the outside.

The material forming insulating seal portion 190 may be UV-setting resin or thermosetting resin or the like. For example, it may be hot melt resin such as silicone resin, epoxy resin, polyisobutylene-based resin, polyamide-based resin, polyolefin-based resin, ionomer resin, or the like, or glass frit, for example. In the case where two or more of these materials are used to form insulating seal portion 190, two or more materials may be mixed or layers made of respective materials may be stacked.

As the UV-setting resin, model number 31X-101 manufactured by ThreeBond can be used. As the thermosetting resin, model number 31X-088 manufactured by ThreeBond or a commercially available epoxy resin or the like can be used.

### <Carrier Transport Portion>

"Carrier transport portion" is formed from a carrier transport material injected in a region located inside insulating seal portion 190 and sandwiched between first electrode 120 and cover portion 111. The carrier transport material therefore also fills at least pores of photoelectric conversion portion 130 and porous insulating portion 140.

The carrier transport material is preferably an electrically conductive material capable of transporting ions, and preferably liquid electrolyte, solid electrolyte, gel electrolyte, or molten salt gel electrolyte, for example.

The liquid electrolyte is preferably a liquid substance containing a redox species, and is not particularly limited as long as the liquid electrolyte can generally be used for a battery or solar cell or the like. Specifically, the liquid electrolyte is made up of a redox species and a solvent in which the redox species can be dissolved, made up of a redox species and a molten salt in which the redox species can be dissolved, or made up of a redox species, the aforementioned solvent, and the aforementioned molten salt.

The redox species may for example be I⁻/I³⁻-based, Br²⁻/Br³⁻-based, Fe²⁺/Fe³⁺-based, or quinone/hydroquinone-based redox species, or the like. Specifically, the redox species may be a combination of iodine (I₂) and metal iodide such as lithium iodide (LiI), sodium iodide (NaI), potassium iodide (KI), or calcium iodide (CaI₂), or the like. The redox species may be a combination of iodine and tetraalkylammonium salt such as tetraethyl ammonium iodide (TEAI), tetrapropyl ammonium iodide (TPAI), tetrabutyl ammonium iodide (TBAI), or tetrahexyl ammonium iodide (THAI), or the like. The redox species may be a combination of iodine and metal bromide such as lithium bromide (LiBr), sodium bromide (NaBr), potassium bromide (KBr), or calcium bromide (CaBr₂), or the like. Among them, a combination of LiI and I₂ is particularly preferred.

The solvent in which the redox species can be dissolved may for example be carbonate compound such as propylene carbonate, nitrile compound such as acetonitrile, alcohols such as ethanol, water, or nonproton polar substance, or the like. Among them, carbonate compound or nitrile compound is particularly preferred. Two or more of these solvents may be mixed for use.

Preferably the solid electrolyte is a conductive material capable of transporting electrons, holes, or ions, can be used as an electrolyte of a photoelectric conversion device, and has no fluidity. Specifically, the solid electrolyte may be a hole transport material such as polycarbazole, an electron transport material such as tetranitrofluorenone, a conductive polymer such as polyol, a polyelectrolyte produced by solidifying a liquid electrolyte by means of a high polymer, a p-type semiconductor such as copper iodine, cuprous thiocyanate, or the like, or an electrolyte produced by solidifying a liquid electrolyte containing a molten salt by means of fine particles.

The gel electrolyte is usually made up of an electrolyte and a gelling agent. The electrolyte may be the aforementioned liquid electrolyte or the aforementioned solid electrolyte.

The gelling agent may for example be a polymeric gelling agent such as cross-linked polyacrylic resin derivative, cross-linked polyacrylonitrile derivative, polyalkylene oxide derivative, silicone resins, or polymer having in its side chain a nitrogen-containing heterocyclic quaternary compound salt structure.

The molten salt gel electrolyte is usually made up of a gel electrolyte as described above and an ambient-temperature molten salt. The ambient-temperature molten salt may for example be nitrogen-containing heterocyclic quaternary ammonium salts such as pyridinium salts or imidazolium salts, or the like.

The electrolyte preferably contains the following additives as required. The additive may be a nitrogen-containing aromatic compound such as t-butyl pyridine (TBP), or imidazole salt such as dimethylpropyl imidazole iodide (DMPII), methylpropyl imidazole iodide (MPII), ethylmethyl imidazole iodide (EMII), ethyl imidazole iodide (EII), or hexylmethyl imidazole iodide (HMII), or the like.

The concentration of the electrolyte is preferably in a range of 0.001 mol/L or more and 1.5 mol/L or less, and particularly preferably in a range of 0.01 mol/L or more and 0.7 mol/L or less. It should be noted that in the case where a catalyst layer of second electrode 160 is located on the light-receiving surface side of the photoelectric conversion device of the present invention, incident light passes through an electrolytic solution in the carrier transport portion to reach the porous semiconductor layer (on the porous semiconductor layer, a dye is adsorbed), to excite carriers. Therefore, in the photoelectric conversion device having the catalyst layer on the light-receiving surface side, the performance of the photoelectric conversion device may depend on the concentration of the electrolyte. It is preferable to set the concentration of the electrolyte in view of the above.

### <Method of Manufacturing Photoelectric Conversion Device>

A method of manufacturing photoelectric conversion device 100 shown in Fig. 1 will be illustrated below.

On translucent substrate 110, a transparent conductive layer forming first electrode 120 is formed. The method of forming the transparent conductive layer is not particularly limited, and is preferably the known sputtering method or the known spraying method, for example. In the case where a metal lead (not shown) is provided on the transparent conductive layer, a metal lead may be formed on translucent substrate 110 by means of the known sputtering method or the known vapor deposition method and thereafter the transparent conductive layer may be formed on translucent substrate 110 including the obtained metal lead, or the transparent conductive layer may first be formed on translucent substrate 110 and then the metal lead may be formed on the transparent conductive layer.

Next, the laser scribing method is used to partially cut the transparent conductive layer and accordingly scribe line 10 is formed. In this way, a plurality of first electrodes 120 are formed.

Subsequently, a porous semiconductor layer is formed on first electrode 120. The method of forming the porous semiconductor layer is not particularly limited. The screen printing method or ink jet method or the like may be used to apply a paste containing a particulate semiconductor material on first electrode 120 and thereafter fire it. Instead of firing, a sol-gel method or an electrochemical redox reaction may be used. Among these methods, the screen printing method using a paste is particularly preferred in view of the fact that a thick porous semiconductor layer can be formed at a low cost.

A method of forming the porous semiconductor layer in which titanium oxide is used as a semiconductor material will more specifically be illustrated below.

Initially, 125 mL of titanium isopropoxide (manufactured by Kishida Chemical Co., Ltd.) is dropped into 750 mL of 0.1 M nitric acid aqueous solution (manufactured by Kishida Chemical Co., Ltd.) to cause hydrolysis, and the resultant substance is heated at 80°C for eight hours. Accordingly, a sol solution is prepared. The obtained sol solution is heated in an autoclave made of titanium at 230°C for 11 hours to thereby grow titanium oxide particles. Then, ultrasonic dispersion is performed for 30 minutes to thereby prepare a colloidal solution containing titanium oxide particles having an average particle size (average primary particle size) of 15 nm. To the obtained colloidal solution, ethanol having a volume twice as large as the colloidal solution is added and they are subjected to centrifugal separation at a rotational speed of 5000 rpm. In this way, titanium oxide particles are obtained.

Subsequently, the obtained titanium oxide particles are washed. After this, the titanium oxide particles are mixed with ethylcellulose and terpineol which are dissolved in dehydrated ethanol and stirred. Thus, the titanium oxide particles are dispersed. After this, this liquid mixture is heated in a vacuum condition to evaporate the ethanol and thereby obtain a titanium oxide paste. Respective concentrations are adjusted so that the concentration of the solid titanium oxide is 20 wt%, the concentration of ethylcellulose is 10 wt%, and the concentration of terpineol is 64 wt% in the final composition.

A solvent used for preparing a titanium oxide paste may be, other than the aforementioned ones, a glyme-based solvent such as ethylene glycol monomethyl ether, an alcohol-based solvent such as isopropyl alcohol, a solvent mixture such as isopropyl alcohol/toluene, or water, or the like. In the case where a paste containing semiconductor particles other than titanium oxide is prepared, the above solvents can also be used.

Subsequently, the titanium oxide paste is applied onto the transparent conductive layer by the above-described method, dried, and thereafter fired. Accordingly, the porous semiconductor layer made from titanium oxide is obtained. Drying conditions and firing conditions, for example, conditions such as temperature, time, or atmosphere, or the like are adjusted appropriately depending on the material for a support or a semiconductor material to be used. Firing is preferably performed in an air atmosphere or inert gas atmosphere at a temperature in a range of 50°C or more and 800°C or less for approximately 10 seconds or more and 12 hours or less. Drying and firing may each be performed once at a certain temperature, or twice or more at different temperatures.

Subsequently, intercellular insulating portion 180 is provided on scribe line 10. The method of forming intercellular insulating portion 180 is not particularly limited, and may be a known method. Specifically, the screen printing method or ink jet method or the like may be used to apply onto scribe line 10 a paste containing an insulating material which is to form intercellular insulating portion 180, and thereafter fire it. Instead of firing, a sol-gel method or an electrochemical redox reaction may be used. Among these methods, the screen printing method using a paste is particularly preferred in view of the fact that intercellular insulating portion 180 can be formed at a low cost.

Subsequently, porous insulating portion 140 is formed on the porous semiconductor layer. The method of forming porous insulating portion 140 is not particularly limited, and may be a known method. Specifically, the screen printing method or inkjet method may be used to apply onto the porous semiconductor layer a paste containing an insulating material which is to form porous insulating portion 140 and thereafter fire it. Instead of firing, a sol-gel method or a method using an electrochemical redox reaction may be performed. Among these methods, the screen printing method using a paste is particularly preferred in view of the fact that porous insulating portion 140 can be formed at a low cost.

Subsequently, second electrode 160 is formed on porous insulating portion 140. The method of forming second electrode 160 is not particularly limited, and may be the vapor deposition method or printing method or the like. In the case where the vapor deposition method is used to fabricate second electrode 160, second electrode 160 itself becomes porous. Therefore, it is unnecessary to separately form, in second electrode 160, pores through which a dye solution or carrier transport material can move. It should be noted that in the case where the pores are formed in second electrode 160, a method that applies a laser beam to partially evaporate second electrode 160 is preferably used.

Next, protective film 170 is formed on the surface of second electrode 160. The method of forming the protective film is a method by which the protective film can be formed on at least a part of the surface of second electrode 160.

Specifically, the method of forming a protective film made from a metal oxide is a method that heats second electrode 160 to thereby form a metal oxide on the surface. In this case, the formed metal oxide is an oxide of the metal which forms the second electrode. It should be noted that the heating conditions for forming the protective film such as temperature, time, atmosphere, and the like can be selected appropriately depending on the purpose.

Subsequently, a dye is caused to be adsorbed on the porous semiconductor layer. The method of causing the dye to be adsorbed may be a method that immerses the porous semiconductor layer in a solution (dye adsorption solution) in which a dye is dissolved, for example. The solvent in which the dye is dissolved is preferably a solvent capable of dissolving the dye. Specifically, the solvent may be alcohols such as ethanol, ketones such as acetone, ethers such as diethyl ether, tetrahydrofuran, or the like, nitrogen compounds such as acetonitrile, halogenated aliphatic hydrocarbon such as chloroform, aliphatic hydrocarbon such as hexane, aromatic hydrocarbon such as benzene, esters such as ethyl acetate, or water, or the like. A mixture of two or more of these solvents may also be used.

The concentration of the dye in the dye adsorption solution can be adjusted appropriately depending on the types of the used dye and solvent. In order to improve the adsorption function of the dye to the porous semiconductor layer, preferably the dye concentration is as high as possible which is for example 5×10⁻⁴ mol/L or more.

Subsequently, insulating seal portion 190 is provided at a predetermined position. Specifically, a heat seal film or UV-setting resin may be cut in the form surrounding a stack (the stack is made up of stacked photoelectric conversion portion 130, porous insulating portion 140, and second electrode 160) formed on translucent substrate 110, to thereby fabricate insulating seal portion 190.

In the case where silicone resin, epoxy resin, or glass frit is used as the material for insulating seal portion 190, a dispenser can be used to pattern insulating seal portion 190. In the case where a hot melt resin is used as the material for insulating seal portion 190, a patterned hole can be made in a sheet member made from the hot melt resin to thereby form insulating seal portion 190.

Insulating seal portion 190 thus formed is arranged between first electrode 120 on translucent substrate 110 and cover portion 111 so that translucent substrate 110 and cover portion 111 are bonded to each other. Then, through heating or UV radiation, insulating seal portion 190 is fixed to translucent substrate 110 and cover portion 111.

Subsequently, the carrier transport material is injected from an inlet provided in advance in cover portion 111. After the portion located inside insulating seal portion 190 and sandwiched between first electrode 120 and cover portion 111 is filled with the carrier transport material, the inlet is sealed by means of a UV-setting resin. The portion is thus filled with the carrier transport material to form carrier transport portion 11 on second electrode 160, and the carrier transport material is also held in photoelectric conversion portion 130 and porous insulating portion 140. In this way, photoelectric conversion device 100 shown in Fig. 1 is manufactured.

### <Photoelectric Conversion Device Module>

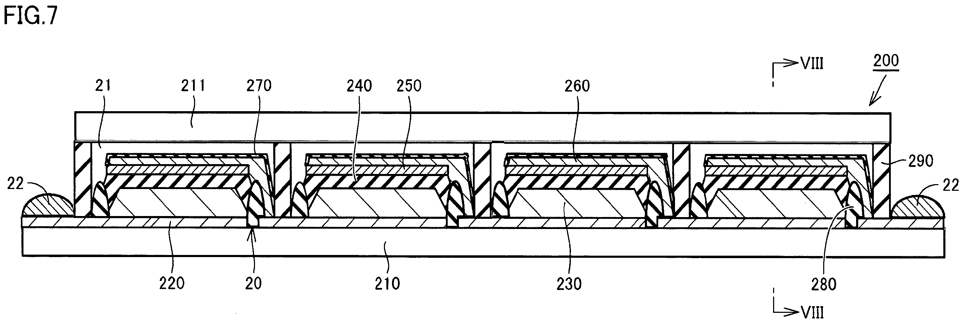

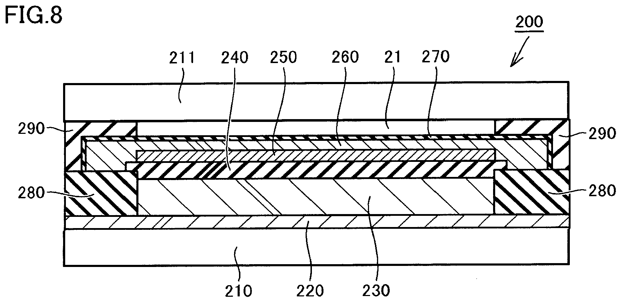

Fig. 7 is a cross-sectional view showing a structure of a photoelectric conversion device module according to an embodiment of the present invention. Fig. 8 is a diagram as seen in the direction indicated by arrows of line VIII-VIII in Fig. 7.

As shown in Fig. 7, four photoelectric conversion devices are connected in series in photoelectric conversion device module 200. Specifically, five first electrodes 220 separated from each other by scribe lines 20 are provided on one translucent substrate 210. On each first electrode 220, a photoelectric conversion portion 230 formed of a porous semiconductor layer on which a dye or the like is adsorbed, a porous insulating portion 240, a catalyst layer 250, a second electrode 260, and a carrier transport portion 21 are provided. On scribe line 20, an intercellular insulating portion 280 is provided.

In such a photoelectric conversion device module 200, second electrode 260 of one of photoelectric conversion devices adjacent to each other is extended over intercellular insulating portion 280 toward first electrode 220 of the other photoelectric conversion device and electrically connected to this first electrode 220. Accordingly, the photoelectric conversion devices adjacent to each other are connected in series.

As shown in Figs. 7 and 8, one cover portion 211 opposite to translucent substrate 210 is provided on second electrode 260 of photoelectric conversion device module 200, and an insulating seal portion 290 is provided between translucent substrate 210 and cover portion 211. The photoelectric conversion devices are sealed by translucent substrate 210, cover portion 211, and insulating seal portion 290.

A region located inside insulating seal portion 290 and between translucent substrate 210 and cover portion 211 is filled with a carrier transport material which forms carrier transport portion 21. Since photoelectric conversion devices adjacent to each other are partitioned by insulating seal portion 290, the carrier transport material can be prevented from moving between the photoelectric conversion devices adjacent to each other. As seen from the above, insulating seal portion 290 has a function of partitioning photoelectric conversion devices adjacent to each other.

As shown in Fig. 7, photoelectric conversion device module 200 is preferably provided with collecting electrodes 22 on translucent substrate 210 and outside insulating seal portion 290. Collecting electrodes 22 are preferably in contact with first electrodes 220 respectively of photoelectric conversion devices that are located on the two ends opposite to each other. Accordingly, current can easily be extracted from photoelectric conversion device module 200 to the outside.

Regarding photoelectric conversion device module 200, the number of photoelectric conversion devices constituting this photoelectric conversion device module 200 is not limited to four. In addition, a plurality of photoelectric conversion devices may be electrically connected in parallel to each other. Further, in the case where photoelectric conversion device module 200 includes three or more photoelectric conversion devices, photoelectric conversion device module 200 may include photoelectric conversion devices connected in series to each other and photoelectric conversion devices connected in parallel to each other. In addition, photoelectric conversion device module 200 is not necessarily limited to a module including only the photoelectric conversion devices having the above-described structure. Rather, photoelectric conversion device module 200 may at least include one photoelectric conversion device having the above-described structure. Namely, photoelectric conversion device module 200 may include a photoelectric conversion device having a structure different from the above-described one.

### EXAMPLES

In the following, Examples and Comparative Examples according to the present invention will more specifically be described.

### <Example 1>

### <Fabrication of Photoelectric Conversion Device>

A transparent electrode substrate (manufactured by Nippon Sheet Glass Co., Ltd., SnO₂-coated glass) was prepared in which a transparent conducting layer made from SnO₂ forming first electrode 120 was formed on translucent substrate 110 made from glass. This transparent electrode substrate had a size of 15 mm × 40 mm × 1.0 mm (thickness). A part of the transparent conducting layer of the transparent electrode substrate was cut by laser scribing.

Next, a screen printing plate having a pattern of intercellular insulating portion 180 (including an opening of 5 mm × 30 mm in a rectangular portion of 7 mm × 34 mm arranged as shown in Fig. 3) and a screen printing machine (manufactured by Newlong Seimitsu Kogyo Co., Ltd., model No. LS-150) were used to apply a commercially available glass paste (manufactured by Noritake Co., Ltd., average particle size: 18 nm) onto first electrode 120, and leveled at room temperature for one hour. After this, the obtained coating was dried in an oven set at 80°C for 20 minutes, and then fired in air for 60 minutes by means of a firing furnace (manufactured by Denken Co., Ltd., model No. KDF P-100) set at 500°C.

Subsequently, the aforementioned screen printing plate was used to apply a commercially available titanium oxide paste (manufactured by Solaronix, trade name: D/SP) like the glass paste, and leveled at room temperature for one hour. After this, the obtained coating was dried in an oven set at 80°C for 20 minutes, and thereafter fired in air for 60 minutes by means of a firing furnace (manufactured by Denken Co., Ltd., model No. KDF P-100) set at 500°C. The application and the firing of the titanium oxide paste were each repeated four times to thereby obtain a porous semiconductor layer having a thickness of 25 µm.

Subsequently, a screen printing plate having a pattern (including an opening of 5.1 mm × 30.1 mm) and a screen printing machine were used to apply a paste including zirconia particles (average particle size: 50 nm) onto the porous semiconductor layer. This was thereafter fired at 500°C for 60 minutes to thereby form porous insulating portion 140. In this way, porous insulating portion 140 having a thickness of 13 µm was obtained.

Then, a mask in which a predetermined pattern was formed and a vapor deposition apparatus (manufactured by Anelva, model No. EVD500A) were used to form catalyst layer 150 made from Pt on porous insulating portion 140 at a vapor deposition rate of 4 Ångstoms/s (10 Å = 1 nm), so that its position and size as seen in a plan view were identical to those of the porous semiconductor layer.

Further, a mask in which a predetermined pattern was formed and a vapor deposition apparatus (manufactured by Anelva, model No. EVD500A) were used to form, on catalyst layer 150, second electrode 160 made from titanium and having a size of 10 mm × 32 mm at a vapor deposition rate of 8 angstrom/s, so that it was in contact with intercellular insulating portion 180.

The substrate on which a stack of these layers was formed was heated at 450°C for 60 minutes by means of the same oven as the one used for firing the paste, to thereby generate a metal oxide on the surface of second electrode 160 and thus form protective film 170.

Subsequently, the stack was immersed, at room temperature for 100 hours, in a dye adsorption solution prepared in advance. After this, the stack was washed with ethanol and then dried at about 60°C for about five minutes. Accordingly, the dye was adsorbed on the porous semiconductor layer.

The dye adsorption solution was prepared by dissolving a dye (manufactured by Solaronix SA., trade name: Ruthenium 620 1H3TBA) expressed by the above chemical formula (1), in a solvent mixture of acetonitrile and t-butanol of 1:1, so that the concentration was 4 × 10⁻⁴ mol/L.

Subsequently, a heat seal film (manufactured by Dupont, Himilan 1702) cut in the shape surrounding the periphery of the stack was used to bond together the transparent electrode substrate on which the stack was formed and cover portion 111 formed of a glass substrate having a size of 11 mm × 40 mm. After this, they were heated in an oven set at about 100°C for 10 minutes. Accordingly, the heat seal film was fused into insulating seal portion 190, and the fused heat seal film and the transparent electrode substrate and cover portion 111 were pressure-joined to each other.

Subsequently, an electrolytic solution prepared in advance was injected from an electrolytic solution injection hole formed in advance in cover portion 111. After a space formed by the transparent electrode substrate, cover portion 111, and insulating seal portion 190 was filled with the electrolytic solution, a UV-setting resin (manufactured by ThreeBond, model No. 31X-101) was used to seal the electrolytic solution injection hole. In this way, a photoelectric conversion device (single cell) was completed.

The electrolytic solution was prepared by the method illustrated below. In acetonitrile serving as a solvent, LiI (manufactured by Aldrich Chemical Company, redox species) was dissolved so that the concentration was 0.1 mol/L and I₂ (manufactured by Kishida Chemical Co., Ltd., redox species) was dissolved so that the concentration was 0.01 mol/L. Further, in this acetonitrile, t-butylpyridine (manufactured by Aldrich Chemical Company, additive) was dissolved so that the concentration was 0.5 mol/L and dimethylpropyl imidazole iodide (manufactured by Shikoku Chemicals Corporation) was dissolved so that the concentration was 0.6 mol/L.

On the transparent electrode substrate of the photoelectric conversion device thus obtained, an Ag paste (manufactured by Fujikura Kasei Co., Ltd., trade name: Dotite) was applied to form a collecting electrode portion. In this way, the photoelectric conversion device of Example 1 was fabricated.

### <Example 2>

In Example 2, a photoelectric conversion device was fabricated similarly to Example 1, except that intercellular insulating portion 180 was formed so that it was arranged as shown in Fig. 4, and further a screen printing plate having a pattern (including an opening of 6 mm × 30.1 mm) and a screen printing machine were used to form porous insulating portion 140.

### <Example 3> (not according to the invention)

In Example 3, a photoelectric conversion device was formed similarly to Example 1, except that the heating after formation of second electrode 160 was not performed, the stack where second electrode 160 had been formed was placed on a hot plate heated to 120°C, and an ethanol solution containing methylbenzimidazole at a concentration of 0.25 mol/L was sprayed onto the stack to thereby form protective film 170.

### <Example 4>

In Example 4, a photoelectric conversion device was fabricated similarly to Example 1, except that intercellular insulating portion 180 was formed so that it was arranged as shown in Fig. 5, and further a screen printing plate having a pattern (including an opening of 7 mm × 30.1 mm) and a screen printing machine were used to form porous insulating portion 140.

### <Example 5>

In Example 5, a photoelectric conversion device was fabricated similarly to Example 1, except that the size of second electrode 160 was 10 mm × 30 mm (the area where second electrode 160 and intercellular insulating portion 180 were in contact with each other was decreased).

### <Example 6>

In Example 6, a photoelectric conversion device was fabricated similarly to Example 1, except that intercellular insulating portion 180 was formed so that it was arranged as shown in Fig. 4, and further a screen printing plate having a pattern (including an opening of 6 mm × 30.1 mm) and a screen printing machine were used to form porous insulating portion 140.

### <Comparative Example 1>

In Comparative Example 1, a photoelectric conversion device was fabricated similarly to Example 1, except that the heating after formation of second electrode 160 was not performed (protective film 170 was not formed).

### <Method and Results of Evaluation>

On a light-receiving surface of each of the photoelectric conversion devices of Examples 1 to 6 and Comparative Example 1, a black mask including an opening having an area of 1.0 cm² was placed. Then, to these photoelectric conversion devices, light having an intensity of 1 kW/m² (AM 1.5 solar simulator) was applied to measure the value of short circuit current Jsc (mA/cm²), open circuit voltage Voc (V), fill factor (FF), and photoelectric conversion efficiency (%). In Table 1, the results of measurement of the photoelectric conversion devices in Examples 1 to 6 and Comparative Example 1 are tabulated.

**[Table 1]**

| | Jsc (mA/cm²) | Voc (V) | FF | conversion efficiency (%) | yield (%) |
|---|---|---|---|---|---|
| Example 1 | 19.5 | 0.686 | 0.673 | 9.00 | 100 |
| Example 2 | 19.6 | 0.683 | 0.671 | 8.98 | 100 |
| Example 3 | 19.8 | 0.682 | 0.670 | 9.05 | 100 |
| Example 4 | 19.0 | 0.691 | 0.671 | 8.80 | 100 |
| Example 5 | 19.4 | 0.684 | 0.672 | 8.91 | 30 |
| Example 6 | 19.5 | 0.684 | 0.672 | 8.96 | 100 |
| Comparative Example 1 | 19.2 | 0.662 | 0.671 | 8.53 | 100 |

As shown in Table 1, the value of short circuit current Jsc (mA/cm₂) of the photoelectric conversion devices was 19.5 in Example 1, 19.6 in Example 2, 19.8 in Example 3, 19.0 in Example 4, 19.4 in Example 5, 19.5 in Example 6, and 19.2 in Comparative Example 1.

Open circuit voltage Voc (V) was 0.686 in Example 1, 0.683 in Example 2, 0.682 in Example 3, 0.691 in Example 4, 0.684 in Example 5, 0.684 in Example 6, and 0.662 in Comparative Example 1.

Fill factor (FF) was 0.673 in Example 1, 0.671 in Example 2, 0.670 in Example 3, 0.671 in Example 4, 0.672 in Example 5, 0.672 in Example 6, and 0.671 in Comparative Example 1.

Photoelectric conversion efficiency (%) was 9.00 in Example 1, 8.98 in Example 2, 9.05 in Example 3, 8.80 in Example 4, 8.91 in Example 5, 8.96 in Example 6, and 8.53 in Comparative Example 1.

The yield (%) of the photoelectric conversion devices affected by peeling of second electrode 160 was 100 in Example 1, 100 in Example 2, 100 in Example 3, 100 in Example 4, 30 in Example 5, 100 in Example 6, and 100 in Comparative Example 1, with respect to an yield of 100% of photoelectric conversion devices when the probability of occurrence of peeling of second electrodes 160 was 0%.

From the fact that the photoelectric conversion efficiency of Examples 1 to 6 is higher than the photoelectric conversion efficiency of Comparative Example 1, it has been confirmed that protective film 170 can be formed on the surface of second electrode 160 to thereby reduce leak current and thus suppress decrease of the conversion efficiency of photoelectric conversion device 100. In addition, from the fact that the yield of photoelectric conversion devices in Example 5 is lower, it has been confirmed that the area of contact between second electrode 160 and intercellular insulating portion 180 can be increased to thereby suppress occurrence of peeling of second electrode 160 and thus keep a high yield of photoelectric conversion devices.

### <Example 7>

### <Fabrication of Photoelectric Conversion Device Module>

A photoelectric conversion device module shown in Figs. 7 and 8 was fabricated.

First, a transparent electrode substrate (manufactured by Nippon Sheet Glass Co., Ltd., trade name: SnO₂-coate glass, 50 mm in length × 37 mm in width × 1.0 mm in thickness) was prepared in which a transparent conducting layer (SnO₂ film) forming first electrode 120 was formed on a surface of translucent substrate 210.

A part of the transparent conducting layer on the surface of the transparent electrode substrate was removed by laser scribing to form scribe lines 20 of 60 µm in width so that the scribe lines extended in the longitudinal direction of the transparent electrode substrate and in parallel with each other. Scribe lines 20 were formed at total four positions at intervals of 7 mm with the leftmost scribe line located at a position of 9.5 mm from the left end of translucent substrate 210 in Fig. 7. Scribe lines 20 were formed to thereby divide first electrode 120 into five sections.

Next, similarly to Example 1 as described above, intercellular insulating portions 280 were formed. Specifically, intercellular insulating portion 280 was formed with a pattern in which an opening of 5 mm × 30 mm was located in a rectangular portion of 6 mm × 34 mm so that its center was located at a position of 6.9 mm from the left end of the transparent electrode substrate. At three locations at intervals of 7 mm from the above-described intercellular insulating portion 280, similar intercellular insulating portions 280 were formed. At the position of the opening of intercellular insulating portion 280, a porous semiconductor layer of 5 mm in width and 30 mm in length was formed in a similar way to Example 1.

On each porous semiconductor layer, porous insulating portion 240 was formed similarly to Example 1. Specifically, one porous insulating portion 240 with a size of 5.1 mm in width and 30.1 mm in length was formed so that its center was located at a position of 6.9 mm from the left end of translucent substrate 210. Three porous insulating portions 240 of a similar size were formed at intervals of 7 mm from the center of the aforementioned one porous insulating portion 240.

Subsequently, catalyst layer 250 made from Pt was formed on each porous insulating portion 240. The size and position of catalyst layer 250 were made identical to the size and position of the porous semiconductor layer.

Then, on each catalyst layer 250, second electrode 260 was formed similarly to Example 1 as described above. One second electrode 260 of 6.2 mm in width and 32 mm in length was formed so that its center was located at a position of 6.4 mm from the left end of the transparent electrode substrate. Three second electrodes 260 of a similar size were formed at intervals of 7 mm from the center of the aforementioned one second electrode 260.

A stack of the layers thus obtained was heated together with the substrate, similarly to Example 1, to thereby form a protective film 270 on the surface of second electrode 260.

Next, the stack was immersed in the dye adsorption solution used in Example 1 as described above, at room temperature for 120 hours, to thereby cause the dye to be adsorbed on the porous semiconductor layer and thus form photoelectric conversion portion 230.

Subsequently, between stacks adjacent to each other and around the cell, a UV-setting resin (manufactured by ThreeBond, 31X-101) was applied by means of a dispenser (manufactured by EFD, ULTRASAVER). A glass substrate of 60 mm in length × 30 mm in width to serve as cover portion 211 was bonded to the UV-setting resin, and thereafter UV radiation was applied to the UV-setting resin by means of a UV lamp (manufactured by EFD, NOVACURE). Accordingly, the UV-setting resin was cured to form insulating seal portion 290.

After this, the same electrolytic solution as Example 1 was injected from an electrolytic solution injection hole provided in advance in the glass substrate. After a space formed by the transparent electrode substrate, cover portion 211, and insulating seal portion 290 was filled with the electrolytic solution, a UV-setting resin (manufactured by ThreeBond, model No. 31X-101) was used to seal the electrolytic solution injection hole.

On the surface of translucent substrate 210, an Ag paste (manufactured by Fujikura Kasei Co., Ltd., trade name: Dotite) was applied to form collecting electrode 22. Accordingly, photoelectric conversion device module 200 was completed.

### <Comparative Example 2>

A photoelectric conversion device module of Comparative Example 2 was fabricated similarly to Example 7, except that the heating after formation of second electrode 260 was not performed (protective film 270 was not formed).

### <Method and Results of Evaluation>

On a light-receiving surface of each of the photoelectric conversion device modules of Example 7 and Comparative Example 2, a black mask was placed. Then, to these photoelectric conversion device modules, light having an intensity of 1 kW/m² (AM 1.5 solar simulator) was applied to measure the value of short circuit current Jsc (mA/cm²), open circuit voltage Voc (V), fill factor (FF), and photoelectric conversion efficiency (%). In Table 2, the results of measurement of the photoelectric conversion devices in Example 7 and Comparative Example 2 are tabulated.

**[Table 2]**

| | Jsc (mA/cm²) | Voc (V) | FF | conversion efficiency (%) | yield (%) |
|---|---|---|---|---|---|
| Example 7 | 4.31 | 2.74 | 0.672 | 7.94 | 100 |
| Comparative Example 2 | 4.30 | 2.65 | 0.671 | 7.65 | 100 |

As shown in Table 2, the value of short circuit current Jsc (mA/cm²) of the photoelectric conversion device modules was 4.31 in Example 7 and 4.30 in Comparative Example 7. Open circuit voltage Voc (V) was 2.74 in Example 7 and 2.65 in Comparative Example 2. Fill factor (FF) was 0.672 in Example 7 and 0.671 in Comparative Example 2. Photoelectric conversion efficiency (%) was 7.94 in Example 7 and 7.65 in Comparative Example 2.

The yield (%) of the photoelectric conversion devices affected by peeling of second electrode 260 was 100 in Example 7 and 100 in Comparative Example 2, with respect to a yield of 100% of photoelectric conversion devices when the probability of occurrence of peeling of second electrodes 260 was 0%.

From the fact that the photoelectric conversion efficiency of Example 7 is higher than the photoelectric conversion efficiency of Comparative Example 2, it has been confirmed that protective film 270 can be formed on the surface of second electrode 260 to thereby reduce leak current and thus suppress decrease of the conversion efficiency of photoelectric conversion device module 200.

### REFERENCE SIGNS LIST

10, 20 scribe line; 11,21 carrier transport portion; 22 collecting electrode; 31 transparent electrode substrate; 100 photoelectric conversion device; 110, 210 translucent substrate; 111, 211 cover portion; 120, 220 first electrode; 130, 230 photoelectric conversion portion; 140, 240 porous insulating portion; 150, 250 catalyst layer; 160, 260 second electrode; 170, 270 protective film; 180, 280 intercellular insulating portion; 190, 290 insulating seal portion; 200 photoelectric conversion device module

## Claims

1. A photoelectric conversion device (100) comprising:
a translucent substrate (110) having a light-receiving surface;
a cover portion (111) arranged opposite to said translucent substrate (110);
a plurality of first electrodes (120) formed on a surface, opposite to said cover portion (111), of said translucent substrate (110);
an insulating seal portion (190) arranged between said first electrode (120) and said cover portion (111) and forming an internal space by surrounding the space;
a photoelectric conversion portion (130) formed in said space and on an upper surface of said first electrode (120);
a second electrode (160) extending in said space so that said second electrode (160) is partially opposite to an upper surface of said photoelectric conversion portion (130) and opposite to a lower surface of said cover portion (111), and electrically connected to another first electrode (120) adjacent to the first electrode (120) having the upper surface on which said photoelectric conversion portion (130) is formed;
a porous insulating portion (140) located between said photoelectric conversion portion (130) and said second electrode (160) and electrically insulating said photoelectric conversion portion (130) and said second electrode (160) from each other;
an intercellular insulating portion (180) located along at least a part of a periphery of said photoelectric conversion portion (130) and electrically insulating said first electrode (120) and said second electrode (160) from each other; and
a carrier transport portion (11) filling an inside of said space,
a protective film (170) being formed on a surface of said second electrode (160), wherein
said second electrode (160) is formed directly on said porous insulating portion (140);
and **characterised in that**
said protective film (170) is an oxide of a metal forming said second electrode (160).

2. The photoelectric conversion device (100) according to claim 1, wherein said second electrode (160) and said intercellular insulating portion (180) contact each other.

3. The photoelectric conversion device (100) according to any of claims 1 to 2, wherein said intercellular insulating portion (180) contacts at least two sides out of four sides of said photoelectric conversion portion (130).

4. The photoelectric conversion device (100) according to any of claims 1 to 3,
wherein said second electrode (160) includes at least one or more metal materials among titanium, nickel, tungsten, and tantalum.

5. A photoelectric conversion device module (200) comprising a plurality of photoelectric conversion devices including the photoelectric conversion device (100) as recited in any of claims 1 to 4 that are electrically connected in series to each other.

6. A photoelectric conversion device module (200) comprising a plurality of photoelectric conversion devices including the photoelectric conversion device (100) as recited in any of claims 1 to 4 that are electrically connected in parallel to each other.

7. A photoelectric conversion device module (200) comprising three or more photoelectric conversion devices including the photoelectric conversion device (100) as recited in any of claims 1 to 4 that are electrically connected to each other,
said photoelectric conversion device module comprising photoelectric conversion devices connected in series to each other and photoelectric conversion devices connected in parallel to each other.

8. The photoelectric conversion device module according to any of claims 5 to 7,
wherein said plurality of photoelectric conversion devices are all the photoelectric conversion device (100) as recited in any of claims 1 to 4.

9. A method of manufacturing the photoelectric conversion device (100) as recited in claim 1, comprising forming said protective film (170) by heating and thereby oxidizing said second electrode (160).

10. A method of manufacturing a photoelectric conversion device module (200), comprising electrically connecting a plurality of photoelectric conversion devices to each other in at least one of series and parallel, said plurality of photoelectric conversion devices including a photoelectric conversion device (100) manufactured by the method of manufacturing the photoelectric conversion device (100) as recited in claim 9.

## Patentansprüche

1. Photoelektrische Umwandlungsvorrichtung (100), umfassend:
ein durchsichtiges Substrat (110) mit einer lichtempfangenden Oberfläche;
einen Abdeckteil (111), der dem durchsichtigen Substrat (110) gegenüberliegend angeordnet ist;
eine Vielzahl erster Elektroden (120), die auf einer dem Abdeckteil (111) gegenüberliegenden Oberfläche des durchsichtigen Substrats (110) ausgebildet sind;
einen isolierenden Dichtungsteil (190), der zwischen der ersten Elektrode (120) und dem Abdeckteil (111) angeordnet ist und einen Innenraum bildet, indem er den Raum umgibt;
einen photoelektrischen Umwandlungsteil (130), der in dem Raum und auf einer oberen Oberfläche der ersten Elektrode (120) ausgebildet ist;
eine zweite Elektrode (160), die in dem Raum so verläuft, dass die zweite Elektrode (160) teilweise einer oberen Oberfläche des photoelektrischen Umwandlungsteils (130) gegenüberliegt und einer unteren Oberfläche des Abdeckteils (111) gegenüberliegt und mit einer anderen ersten Elektrode (120) elektrisch verbunden ist, die der ersten Elektrode (120) mit der oberen Oberfläche benachbart ist, auf der der photoelektrische Umwandlungsteil (130) ausgebildet ist;
einen porösen isolierenden Teil (140), der zwischen dem photoelektrischen Umwandlungsteil (130) und der zweiten Elektrode (160) gelegen ist und den photoelektrischen Umwandlungsteil (130) und die zweite Elektrode (160) voneinander elektrisch isoliert;
einen interzellulären isolierenden Teil (180), der entlang zumindest einem Teil eines Umfangs des photoelektrischen Umwandlungsteils (130) gelegen ist und die erste Elektrode (120) und die zweite Elektrode (160) voneinander elektrisch isoliert; und
einen Trägertransportteil (11), der ein Inneres des Raums füllt,
einen Schutzfilm (170), der auf einer Oberfläche der zweiten Elektrode (160) ausgebildet ist, wobei
die zweite Elektrode (160) direkt auf dem porösen isolierenden Teil (140) ausgebildet ist; und **dadurch gekennzeichnet, dass**
der Schutzfilm (170) ein Oxid eines Metalls ist, das die zweite Elektrode (160) bildet.

2. Photoelektrische Umwandlungsvorrichtung (100) nach Anspruch 1, wobei die zweite Elektrode (160) und der interzelluläre isolierende Teil (180) einander berühren.

3. Photoelektrische Umwandlungsvorrichtung (100) nach einem der Ansprüche 1 bis 2, wobei der interzelluläre isolierende Teil (180) zumindest zwei Seiten von vier Seiten des photoelektrischen Umwandlungsteils (130) berührt.

4. Photoelektrische Umwandlungsvorrichtung (100) nach einem der Ansprüche 1 bis 3, wobei die zweite Elektrode (160) zumindest ein oder mehr Metallmaterialien unter Titan, Nickel, Wolfram und Tantal enthält.

5. Photoelektrisches Umwandlungsvorrichtungsmodul (200), umfassend eine Vielzahl von photoelektrischen Umwandlungsvorrichtungen, enthaltend die photoelektrische Umwandlungsvorrichtung (100) nach einem der Ansprüche 1 bis 4, die miteinander elektrisch in Reihe geschaltet sind.

6. Photoelektrisches Umwandlungsvorrichtungsmodul (200), umfassend eine Vielzahl von photoelektrischen Umwandlungsvorrichtungen, enthaltend die photoelektrische Umwandlungsvorrichtung (100) nach einem der Ansprüche 1 bis 4, die miteinander elektrisch parallel geschaltet sind.

7. Photoelektrisches Umwandlungsvorrichtungsmodul (200), umfassend drei oder mehr photoelektrische Umwandlungsvorrichtungen, enthaltend die photoelektrische Umwandlungsvorrichtung (100) nach einem der Ansprüche 1 bis 4, die miteinander elektrisch verbunden sind,
wobei das photoelektrische Umwandlungsvorrichtungsmodul miteinander in Reihe geschaltete photoelektrische Umwandlungsvorrichtungen und miteinander parallel geschaltete photoelektrische Umwandlungsvorrichtungen umfasst.

8. Photoelektrisches Umwandlungsvorrichtungsmodul nach einem der Ansprüche 5 bis 7, wobei die Vielzahl photoelektrischer Umwandlungsvorrichtungen alle die photoelektrische Umwandlungsvorrichtung (100) nach einem der Ansprüche 1 bis 4 sind.

9. Verfahren zum Herstellen der photoelektrischen Umwandlungsvorrichtung (100) nach Anspruch 1, umfassend ein Ausbilden des Schutzfilms (170), indem die zweite Elektrode (160) erhitzt und dadurch oxidiert wird.

10. Verfahren zum Herstellen eines photoelektrischen Umwandlungsvorrichtungsmoduls (200), umfassend ein elektrisches Miteinanderverbinden, in Reihe und/oder parallel, einer Vielzahl von photoelektrischen Umwandlungsvorrichtungen, wobei die Vielzahl von photoelektrischen Umwandlungsvorrichtungen eine photoelektrische Umwandlungsvorrichtung (100) enthält, die gemäß dem Verfahren zum Herstellen der photoelektrischen Umwandlungsvorrichtung (100) nach Anspruch 9 hergestellt wurde.

## Revendications

1. Dispositif de conversion photoélectrique (100) comprenant :
un substrat translucide (110) qui présente une surface de réception de lumière ;
une partie de recouvrement (111) qui est disposée en face du substrat translucide (110) ;
plusieurs premières électrodes (120) qui sont formées sur une surface du substrat translucide (110) située en face de la partie de recouvrement (110) ;
une partie d'étanchéité isolante (190) qui est disposée entre la première électrode (120) et la partie de recouvrement (111) et qui forme un espace intérieur en entourant l'espace ;
une partie de conversion photoélectrique (130) qui est formée dans ledit espace et sur une surface supérieure de la première électrode (120) ;
une seconde électrode (160) qui s'étend dans ledit espace de manière à se trouver en partie en face d'une surface supérieure de la partie de conversion photoélectrique (130) et en face d'une surface inférieure de la partie de recouvrement (111), et qui est reliée électriquement à une autre première électrode (120) voisine de la première électrode (120) qui présente la première surface sur laquelle est formée la partie de conversion photoélectrique (130) ;
une partie isolante poreuse (140) qui est située entre la partie de conversion photoélectrique (130) et la seconde électrode (160) et qui isole électriquement ladite partie de conversion photoélectrique (130) et ladite seconde électrode (160) l'une de l'autre ;
une partie isolante intercellulaire (180) qui est située le long d'une partie au moins d'une périphérie de la partie de conversion photoélectrique (130) et qui isole électriquement la première électrode (120) et la seconde électrode (160) l'une de l'autre ; et
une partie de transport porteuse (11) qui remplit l'intérieur dudit espace,
un film de protection (170) étant formé sur une surface de la seconde électrode (160),
la seconde électrode (160) étant formée directement sur la partie isolante poreuse (140) ;
et **caractérisé en ce que** le film de protection (170) est un oxyde d'un métal formant la seconde électrode (160).

2. Dispositif de conversion photoélectrique (100) selon la revendication 1, dans lequel la seconde électrode (160) et la partie isolante intercellulaire (180) sont en contact.

3. Dispositif de conversion photoélectrique (100) selon l'une quelconque des revendications 1 à 2, dans lequel la partie isolante intercellulaire (180) est en contact avec au moins deux côtés sur quatre de la partie de conversion photoélectrique (130).

4. Dispositif de conversion photoélectrique (100) selon l'une quelconque des revendications 1 à 3, dans lequel la seconde électrode (160) contient l'un au moins des matériaux métalliques suivants : titane, nickel, tungstène, tantale.

5. Module de dispositifs de conversion photoélectrique (200) comprenant plusieurs dispositifs de conversion photoélectrique contenant le dispositif de conversion photoélectrique (100) tel qu'il est présenté dans l'une quelconque des revendications 1 à 4, qui sont reliés électriquement entre eux en série.

6. Module de dispositifs de conversion photoélectrique (200) comprenant plusieurs dispositifs de conversion photoélectrique contenant le dispositif de conversion photoélectrique (100) tel qu'il est présenté dans l'une quelconque des revendications 1 à 4, qui sont reliés électriquement entre eux en parallèle.

7. Module de dispositifs de conversion photoélectrique (200) comprenant trois, ou plus, dispositifs de conversion photoélectrique contenant le dispositif de conversion photoélectrique (100) tel qu'il est présenté dans l'une quelconque des revendications 1 à 4, qui sont reliés électriquement entre eux,
le module de dispositifs de conversion photoélectrique comprenant des dispositifs de conversion photoélectrique reliés entre eux en série, et des dispositifs de conversion photoélectrique reliés entre eux en parallèle.

8. Module de dispositifs de conversion photoélectrique selon l'une quelconque des revendications 5 à 7, dans lequel les dispositifs de conversion photoélectrique sont tous constitués par le dispositif de conversion photoélectrique tel qu'il est présenté dans l'une quelconque des revendications 1 à 4.

9. Procédé pour fabriquer le dispositif de conversion photoélectrique (100) tel qu'il est présenté dans la revendication 1, comprenant la formation du film de protection (170) par chauffage et, ainsi, oxydation de la seconde électrode (160).

10. Procédé pour fabriquer un module de dispositifs de conversion photoélectrique (200), comprenant la liaison électrique de plusieurs dispositifs de conversion photoélectrique entre eux en série et/ou en parallèle, les dispositifs de conversion photoélectrique contenant un dispositif de conversion photoélectrique (100) fabriqué par le procédé pour fabriquer le dispositif de conversion photoélectrique (100) tel qu'il est présenté dans la revendication 9.
